# FASCICULE DE BREVET EUROPEEN

(11) **EP 0 413 010 B1**
(45) Date de publication et mention de la délivrance du brevet: **01.09.1993**
(21) Numéro de dépôt: 90902798.9
(22) Date de dépôt: 26.01.1990
(51) Int. Cl.: B29D 11/00, C09K 11/06, G02B 6/16, C03B 37/075

(54) **PROCEDE DE FABRICATION DE FIBRES OPTIQUES SCINTILLANTES ET FIBRES OPTIQUES OBTENUES**
VERFAHREN ZUR HERSTELLUNG VON SZINTILLIERENDEN OPTISCHEN FASERN UND DANACH HERGESTELLTE FASERN
PROCESS FOR PRODUCING SCINTILLATING OPTICAL FIBRES AND OPTICAL FIBRES OBRTAINED

(30) Priorité: 31.01.1989 FR 8901327
(43) Date de publication de la demande: 20.02.1991
(73) Titulaire: CENTRE NATIONAL DE LA RECHERCHE SCIENTIFIQUE (CNRS), 75700 Paris (FR); ORGANISATION EUROPEENNE POUR LA RECHERCHE NUCLEAIRE (CERN), 1211 Geneve 23 (CH)
(72) Inventeur: FABRE, Jean-Paul, F-01220 Divonne (FR); LEUTZ, Heinrich, F-01170 Gex (FR); DESTRUEL, Pierre La Pastourelle Verterive, F-31100 Toulouse (FR); FARENC, Jean, F-31650 Saint-Orens (FR); TAUFER, Michel, F-31000 Toulouse (FR); PUERTOLAS, Didier, F-31200 Toulouse (FR)
(74) Mandataire: Barre, Philippe
(86) Numéro de dépôt international: FR9000074
(87) Numéro de publication internationale: WO9008644

(56) Documents cités:
- EP-A- 0 240 106
- EP-A- 0 269 223
- DE-A- 2 531 495
- FR-A- 2 533 709
- US-A- 4 788 436
- Japanese Patent Gazette, week 8842, section CH, class A, Nr 88-295423(42), Derwent Publications Ltd, (Londres, GB)
- Patent Abstracts of Japan, vol 7, Nr 146 (P-206) (1291), 25 June 1983
- Journal of Photochemistry, vol 21 1983, Elsevier Sequoia, (CH), H Gusten et al. 'Influence of restricted intramolecular motions on the fluorescence quantum yield of Fluorophores', see pages 53-60
- Chemical Abstracts, vol 109, 1988 (Columbus, Ohio, US), K Zhao et al: 'Use of a new scintillator PMP for counting alpha-emetters', see page 599, abstract 158377g
- Chemical Abstracts, vol 88, 1978, (Columbus, Ohio, US), H Guesten et al: 'Organic scintillators with unusually large stokes' shifts', see page 488, abstract 112705g
- Chemical Abstracts, vol 110, 1989, (Columbus, Ohio, US), P Destruel et al: 'A new plastic scintillator with large Stokes shift', see page 530, abstract 16212g
- Chemical Abstracts, vol 110, 1989, (Columbus, Ohio, US), M Boven et al: 'A new radiation-hard plastic scintillator', see page 541, abstract 191249w
- Chemical Abstracts, vol 93, 1980, (Columbus, Ohio, US), H Guesten et al: 'Novel primary solutes for liquid scintillaion counting', see page 527, abstract 103411j

## Description

L'invention concerne un procédé de fabrication de fibres optiques scintillantes du type possédant un coeur en polymère à cycles aromatiques dopé par des molécules se caractérisant par un décalage de Stokes. Elle s'étend aux nouvelles fibres optiques fabriquées par le procédé.

On sait que les fibres optiques scintillantes sont notamment utilisées pour la détection des particules à haute énergie. Actuellement, ces fibres sont fabriquées en dissolvant dans un monomère de coeur appelé à polymériser deux dopants :
. d'une part un dopant de capture de l'énergie d'excitation, apte à réémettre celle-ci sous forme de photons de longueur d'onde intermédiaire, généralement du PBD (2 phényl-5(4-biphénylyl)-1,3,4-oxadiazole), ou du butyl PBD, ou du p-terphényl,
. d'autre part un dopant de décalage vers le visible, apte à absorber ces photons intermédiaires pour les réémettre dans le visible, généralement du POPOP : (1,4-di-2-(5-phényloxazolyl)benzène) ou du bis-MSB : (p-bis(o-méthylstyryl)benzène).

Toutefois, cette technique de fabrication et de dopage qui est décrite dans le brevet FR-A-2 533 709 et est actuellement la seule existante pour fabriquer des fibres optiques scintillantes présente trois défauts essentiels.

En premier lieu, elle ne permet pas de fabriquer des fibres de très petit diamètre et les fibres obtenues ont en pratique un diamètre supérieur ou égal à 500 µm. Cette limitation provient de la combinaison de deux facteurs, l'un lié au rapport de l'énergie de la lumière guidée à l'énergie d'excitation, qui devient très faible pour ces fibres connues à partir du diamètre de 500 µm, l'autre résidant dans les difficultés d'étirage rencontrées au-dessous de ce diamètre. En conséquence, les fibres de très faible diamètre qui ont été obtenues au cours d'essais utilisant la technique connue précitée sont de mauvaise qualité, inaptes notamment à être utilisées comme détecteur de particules dans les accélérations du type accélérations linéaires, synchrotron, ou dans les appareillages médicaux. Or, la réduction du diamètre des fibres jusqu'à des diamètres de l'ordre de 30 à 50 µm s'avère actuellement essentielle, soit pour réaliser des détecteurs de particules, de taille acceptable, adaptés aux accélérateurs en projet qui tendent à mettre en jeu des énergies de faisceau de plus en plus grandes, soit pour accroître la résolution des détecteurs actuels notamment dans le domaine médical.

En outre, les fibres optiques scintillantes fabriquées par la technique actuelle ont une longueur d'atténuation qui en pratique est inférieure à 2 mètres, c'est-à-dire que, au-delà de cette longueur, le rapport de la quantité de lumière parvenant à l'extrémité de la fibre à la quantité de lumière produite in situ par l'énergie d'excitation devient trop faible pour une utilisation pratique. Cette limite provient notamment du coefficient d'extinction molaire du matériau de ces fibres qui est de l'ordre de 20 à 30 litres/mole.cm vers 420 nm.

Enfin, les fibres existantes utilisées en faisceau dans les détecteurs nécessitent la présence d'une gaine supplémentaire opaque autour de chaque fibre pour supprimer les phénomènes de "diaphotie", consistant en une délocalisation de la lumière depuis la fibre excitée vers les fibres voisines, ce qui réduit la résolution du détecteur. La nécessité de cette gaine supplémentaire opaque renchérit le procédé de fabrication, cependant que son encombrement est préjudiciable aux performances des faisceaux de fibres et donc du détecteur.

Les fibres scintillantes existantes et leur technique de fabrication présentent donc de graves limitations à l'égard desquelles il n'existe actuellement aucune solution technique.

La présente invention se propose de pallier les défauts sus-évoqués et de fournir une solution permettant la fabrication de fibres optiques scintillantes en polymère susceptibles de présenter des diamètres très inférieures à ceux des fibres actuelles et de bénéficier de longueurs d'atténuation accrues, quel que soit le diamètre desdites fibres.

Un objectif de l'invention est en particulier d'autoriser la fabrication de fibres de qualité ayant des diamètres de l'ordre de 30 à 50 µm.

Un autre objectif est en particulier de permettre une réduction très importante du' coefficient d'extinction molaire du matériau de coeur des fibres, réduction dans un rapport supérieur à 100.

Un autre objectif est de supprimer totalement les phénomènes de diaphotie dans le cas de faisceaux de fibres, et ce, en l'absence de gaine supplémentaire opaque.

A cet effet, le procédé de fabrication visé par l'invention est du type consistant à utiliser un monomère possédant des cycles aromatiques, dit monomère de coeur, en particulier vinyltoluène ou styrène, à dissoudre dans ledit monomère des molécules de dopage présentant un décalage de Stokes, à chauffer le mélange en vue de l'amener à polymériser pour conduire à un polymère dit de coeur et à effectuer une opération de dépôt en surface d'un matériau de gainage d'indice de réfraction inférieur à celui du polymère de coeur et une opération d'étirage dudit polymère en vue de réaliser la fibre optique ; le procédé conforme à la présente invention se caractérise en ce que :
- l'on dissout dans le monomère de coeur des molécules de dopage de 1-phényl-3-mésityl-2-pyrazoline (PMP) présentant un décalage de Stokes caractéristique d'une absorption de la lumière ultraviolette avec un pic à 295 nm (mesuré en solution dans du cyclohexane) et d'une réémission dans le visible avec un pic à 410 nm (mesuré en solution dans du cyclohexane), ladite dissolution étant effectuée pour obtenir un mélange de concentration comprise entre 0,005 et 0,2 mole de PMP par litre de monomère ;
- l'on réalise la polymérisation dudit mélange, notamment en ajoutant un agent de transfert de chaîne, de façon à limiter la masse moléculaire du polymère de coeur obtenu à des valeurs comprises entre 80 000 et 600 000.

Les essais effectués ont montré que le procédé de fabrication conforme à l'invention permet de fabriquer des fibres optiques scintillantes dont le diamètre peut descendre jusqu'à 30 µm (et éventuellement en deçà selon le processus d'étirage mis en oeuvre). Dans le cas des fibres de petits diamètres, le rapport de l'énergie de la lumière guidée à l'énergie d'excitation demeure bon et acceptable pour des utilisations dans le domaine des détecteurs de particules ; de plus, aucune difficulté particulière d'étirage n'a été observée et le procédé conduit à des fibres de bonne qualité. En outre, le coefficient d'extinction molaire du matériau de coeur des fibres est de l'ordre de 0,1 à 420 nanomètres, c'est-à-dire de l'ordre de 300 à 500 fois inférieur à celui des matériaux connus. De plus, l'on a pu observer que, dans un faisceau, les fibres obtenues par le procédé de l'invention ne donnaient lieu à aucun phénomène de diaphotie, ce qui permet de les réaliser sans gaine opaque.

Des explications détaillées sur ces performances seront fournies plus loin en référence aux dessins annexés.

Selon un mode de mise en oeuvre préféré fournissant un compromis optimisé entre le rendement quantique du matériau de coeur (rapport de l'émission de lumière à l'excitation incidente) et sa transparence (aptitude à transmettre la lumière émise), l'on dissout le PMP dans le monomètre de coeur en vue d'obtenir un mélange de concentration comprise entre 0,01 et 0,05 mole de PMP par litre de monomère.

En outre, la polymérisation est de préférence engendrée en chauffant le mélange en deux étapes, d'abord jusqu'à un premier palier situé entre 90° C et 110° C pendant une durée adaptée pour atteindre un taux de polymérisation au moins égal à 80 %, puis jusqu'à un second palier situé entre 130° C et 150° C jusqu'à obtenir un taux de polymérisation supérieur à 99,5 %. Ce processus permet d'assurer un meilleur contrôle de la réaction chimique (pas d'emballement thermique, homogénéité accrue dans la plage des masses moléculaires précitées), et donc d'améliorer encore la qualité des fibres.

De plus, le procédé est avantageusement mis en oeuvre dans les conditions suivantes, permettant d'obtenir des fibres cylindriques exemptes de bulles au coeur du matériau :
- le mélange est amené à polymériser dans une ampoule cylindrique en vue d'obtenir un barreau après polymérisation,
- ledit barreau est refroidi à une vitesse de refroidissement inférieure à 0,15° C/minute jusqu'à la température ambiante,
- l'opération d'étirage est effectuée après avoir réchauffé le barreau jusqu'à ramollissement.

De préférence, le refroidissement sera réalisé en plusieurs étapes ayant des vitesses de refroidissement décroissantes au fur et à mesure que l'on approche de la température de transition vitreuse du polymère de coeur, la vitesse de refroidissement pour franchir cette température étant inférieure à 0,05° C/minute. On prévient ainsi toute formation de bulles ou microbulles dans le matériau de coeur.

Par ailleurs, le matériau de gainage utilisé est préférentiellement constitué par un monomère acrylique fluoré, dit monomère de gaine, qui conduit à un polymère présentant un indice de réfraction inférieur à 1,42 , de bonnes propriétés thermiques et apte à s'étirer dans les mêmes conditions que le polymère de coeur. Ce monomère de gaine est déposé en surface du barreau de polymère de coeur et est amené à polymériser autour dudit barreau soit par photopolymérisation soit par polymérisation thermique, l'ensemble étant ensuite réchauffé et étiré pour obtenir la fibre.

En outre, pour accroître la durée de vie des fibres, l'on ajoute de préférence au monomère de coeur ou au mélange un produit antioxydant adapté pour limiter les phénomènes d'oxydation du polymère de coeur et du PMP : ces antioxydants sont bien connus en eux-mêmes et l'on pourra par exemples utiliser les α ou β phénylnaphtylamine.

L'agent de transfert de chaîne peut être choisi dans la famille des mercaptans, et notamment : glycoldimercapto acétate, n butyl mercaptan, ou lauryl mercaptan, dans des concentrations comprises entre 0,01 et 0,05 mole/litre ; cette plage de concentration est suffisamment élevée pour conserver une bonne efficacité à l'agent et permettre l'obtention de masse moléculaire de valeurs sus-définies, et suffisamment faible pour ne pas réduire le rendement quantique du matériau.

L'invention s'étend, en tant que nouveau produit, aux fibres optiques scintillantes, obtenues par mise en oeuvre du procédé. Ces fibres comprennent un coeur en polymère à cycles aromatiques contenant des molécules de dopage à décalage de Stokes, et une gaine périphérique d'indice de réfraction inférieur à celui du coeur, et sont caractérisées en ce que :
- le polymère de coeur possède une masse moléculaire comprises entre 80 000 et 600 000,
- les molécules de dopage sont constituées par du 1-phényl-3-mésityl-2-pyrazoline (PMP) de façon que la fibre soit apte à transformer directement une énergie d'excitation d'un rayonnement α, β ou γ en lumière visible, et à transmettre et guider cette dernière.

La description qui suit en référence aux dessins annexés décrit trois exemples de mise en oeuvre du procédé de l'invention qui illustrent et expliquent les performances des fibres obtenues : sur ces dessins :
- la figure 1 est un diagramme comparatif fournissant les coefficients d'extinction molaire des matériaux obtenus dans chacun des exemples (courbes A, B, C) comparés au coefficient d'extinction molaire d'un matériau connu (courbe D),
- Les figures 2a et 2b fournissent à titre comparatif les diagrammes d'absorption/émission dans le cas de l'invention (figure 2a) et dans le cas du matériau connu (figure 2b),
- les figures 3a et 3b illustrent les phénomènes de scintillation, d'une part, dans le cas de fibres conformes à l'invention (figure 3a), d'autre part, dans le cas de fibres de type classique, supposées de même diamètre.

### EXEMPLE 1

Le présent exemple vise la fabrication de fibres à partir d'un monomère constitué par du vinyltoluène, dopé au moyen de PMP. Comme cela est connu en soi, le PMP se caractérise par un décalage de Stokes correspondant à un pic d'absorption à 295 nm et un pic d'émission à 410 nm (ces pics étant mesurés, selon l'habitude, en solution dans du cyclohexane).

Ce monomère aromatique se présente sous la forme d'un liquide transparent sur lequel on opère une dessication préalable en vue de réduire son taux d'humidité à une valeur inférieure à 10 ppm.

En l'exemple, cette dessication est réalisée par la procédure suivante :

On laisse s'écouler par gravité 600 cm³ de vinyltoluène au travers d'un lit de gel de silice puis au travers d'un lit d'alumine basique dans un ballon de 1 000 cm³ à fond rond. Le ballon est équipé d'une colonne de 15 mm de diamètre et de 40 cm de haut, munie d'une double paroi sous vide. La colonne est remplie d'hélices en verre et munie d'une tête de distillation. Cette même tête est équipée d'un robinet qui permet de prélever la fraction de tête du distillat. La fraction intermédiaire est recueillie dans un deuxième ballon de 500 cm³ lui-même équipé d'une deuxième colonne et d'une deuxième tête de distillation. La double distillation est conduite sous vide primaire pour abaisser la température de travail à 50° C. On se débarrasse de 100 cm³ de fraction de tête.

Le monomère ainsi purifié et desséché est mélangé au PMP, à un agent de transfert (préalablement purifié par distillation) constitué par du GDMA (glycoldimercapto acétate) et à un antioxydant constitué par du α phénylnaphtylamine. A cet effet, une fraction intermédiaire de 200 cm³ du monomère est transvasée dans une ampoule cylindrique en verre contenant des quantités prédéterminées de PMP, de GDMA et de α phénylnaphtylamine. Ces quantités sont calculées pour obtenir une concentration de 0,05 mole/litre de PMP, de 0,017 mole d'agent de transfert par litre et de 0,5 g/l d'agent antioxydant.

Le transvasement s'effectue sous vide sans contact avec l'atmosphère pour éviter toute pollution des produits. Le mélange ainsi obtenu est dégazé par des cycles successifs de congélation, vide poussé, décongélation jusqu'à ce qu'il n'apparaisse plus de bulles au cours de la décongélation.

Le tube de verre est ensuite scellé sous vide puis placé dans un bain d'huile thermostaté pour provoquer la polymérisation du mélange. La température est maintenue constante à la valeur de 95° C pendant 45 heures. Elle est ensuite graduellement augmentée jusqu'à 140° C et maintenue à cette valeur pendant 24 heures. Elle est enfin ramenée progressivement à température ambiante à plusieurs vitesses de refroidissement :
- de 140° à 120° C à 0,1°/minute,
- de 120° à 110° C à 0,05°/minute,
- de 110° à 90° C à 0,03°/minute (température de transition vitreuse : 100° C),
- de 90° à la température ambiante, à 0,5°/minute.

Le tube de verre est ensuite scié à sa partie supérieure et le polymère est retiré.

Le barreau obtenu est centré dans une ampoule en verre de diamètre supérieur et l'on verse un monomère de gaine constitué par du méthacrylate de trifluoroéthyle contenant un photosensibilisateur ; l'ensemble est refroidi à 5° C et l'on procède à une photopolymérisation au moyen d'une rampe circulaire de lampes ultraviolettes. L'ensemble est ensuite retiré de l'ampoule et placé dans une étuve à 80° C pendant 24 heures pour parfaire la polymérisation de la gaine.

Ensuite, la préforme est placée sur une tour à fibrer et portée localement à 190° C dans la section étirée. La vitesse d'étirage est déterminée en fonction du diamètre désiré. La masse moléculaire du polymère de coeur de l'ordre de 150 000 autorise un étirage sans difficulté.

### EXEMPLE 2

La même procédure est utilisée en prévoyant une concentration de PMP égale à 0,025 mole par litre de monomère de coeur, les autres paramètres demeurant identiques.

### EXEMPLE 3

La même procédure est utilisée en utilisant comme monomère de coeur du styrène dans des conditions de mise en oeuvre identiques à celles de l'exemple 1, à l'exception suivant près : la température du premier palier de polymérisation est ajustée à 105° C (au lieu de 95° C).

Les figures illustrent les performances auxquelles conduit le procédé de l'invention.

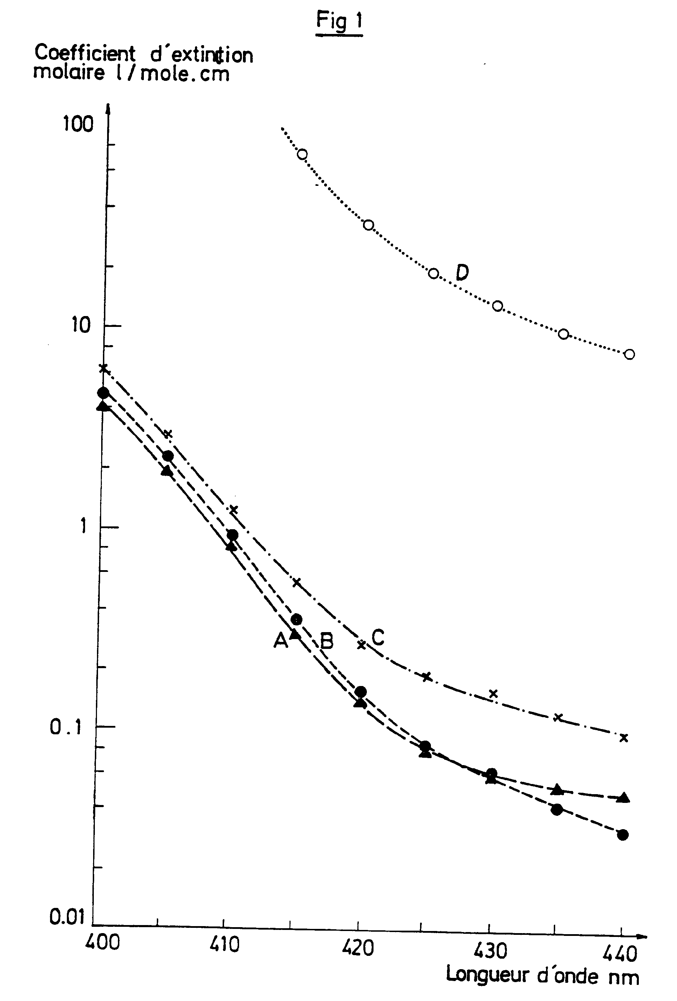

Les courbes A, B, C de la figure 1 donnent respectivement pour les exemples 1, 2 et 3 les coefficients d'extinction molaire en litre/mole.cm en fonction de la longueur d'onde en nanomètre dans la région des longueurs d'onde d'émission du PMP.

La courbe D de la figure 1 est une courbe similaire pour un matériau scintillant connu fabriqué par la Société "Nuclear Enterprise" et désigné sous la référence "NE110". Ce matériau est constitué par du vinyltoluène dopé au moyen de deux produits : un dopant de capture D₁ et un dopant de décalage D₂ (de types déjà évoqués) qui travaillent en série.

Le coefficient d'extinction molaire des matériaux fabriqués par le procédé de l'invention est largement cent fois plus faible que celui du matériau connu, de sorte que les longueurs d'atténuation intrinsèques sont beaucoup plus élevées dans le cas de l'invention.

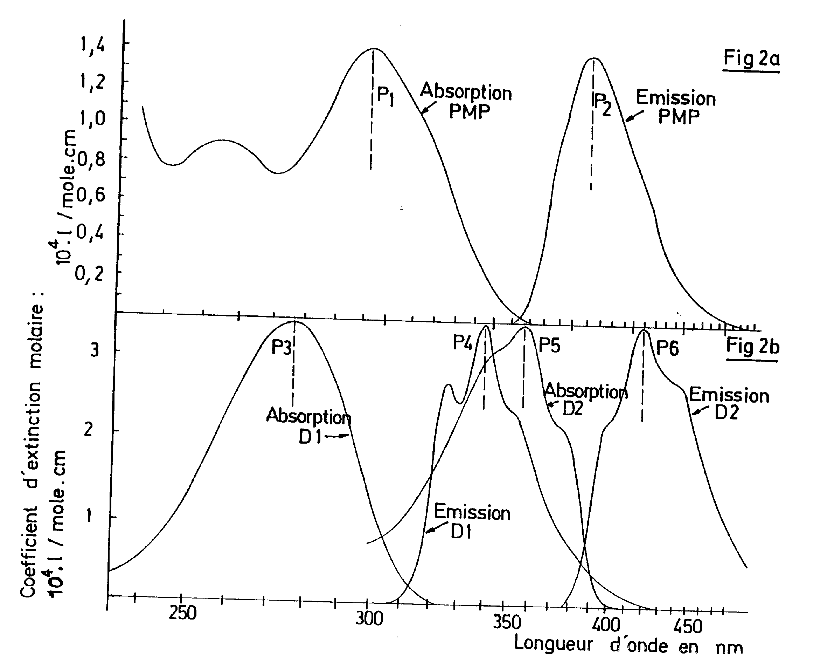

Les figures 2a et 2b permettent d'expliquer les fonctionnements différents des deux matériaux :
- matériau selon l'invention à un seul dopant PMP (figure 2a),
- matériau classique à deux dopants D₁ et D₂ (figure 2b).

Sur ces figures ont été portés les spectres d'absorption et d'émission du ou des dopants dans les deux cas (supposés mesurés en solution dans du cyclohexane). Les spectres d'absorption sont exprimés en ordonnée en 10⁴ l/mole.cm et les spectres d'émission en unité arbitraire (normalisée pour obtenir des pics de même amplitude).

Le PMP absorbe dans la région d'émission du polymère (pic P₁, figure 2a), ce qui permet un bon transfert d'énergie entre le rayonnement d'excitation (α, β, γ) et le dopant par l'intermédiaire dudit polymère (il est à noter que le transfert polymère/dopant n'est pas radiatif). Le PMP réémet en lumière visible vers 410 nm (pic P₂), longueur d'onde correspondant à une bonne transparence du polymère et une sensibilité maximum des photocathodes qui sont appelées à être disposées en bout de fibre pour la détection de la lumière guidée.

Les spectres d'absorption et d'émission du PMP ne présentent qu'un très faible recouvrement de sorte que l'auto-absorption de ce matériau est très faible, d'où la possibilité de l'utiliser aux fortes concentrations évoquées précédemment (jusqu'à 0,2 mole par litre de monomètre).

Par contre, pour le matériau connu (figure 2b), le décalage en longueur d'onde depuis la région d'émission du polymère jusqu'à la longueur d'onde de la lumière visible est assuré de façon tout à fait différente par le travail en série des deux dopants :
- le dopant de capture D₁ absorbe dans la région d'émission du polymère (pic P₃) et réémet sur une longueur d'onde intermédiaire (pic P₄),
- le dopant de décalage D₂ absorbe la lumière émise par D₁ sur cette longueur d'onde intermédiaire (pic P₅) et réémet dans le visible (pic P₆).

Ce travail en chaîne est très pénalisant comme on le comprendra plus loin dans le cas de fibres de petit diamètre ; de plus, les pics P₅ et P₆ présentent une importante zone de recouvrement, ce qui conduit à une auto-absorption du dopant de décalage, qui limite la concentration utilisable (donc accroît le libre parcours des photons intermédiaires).

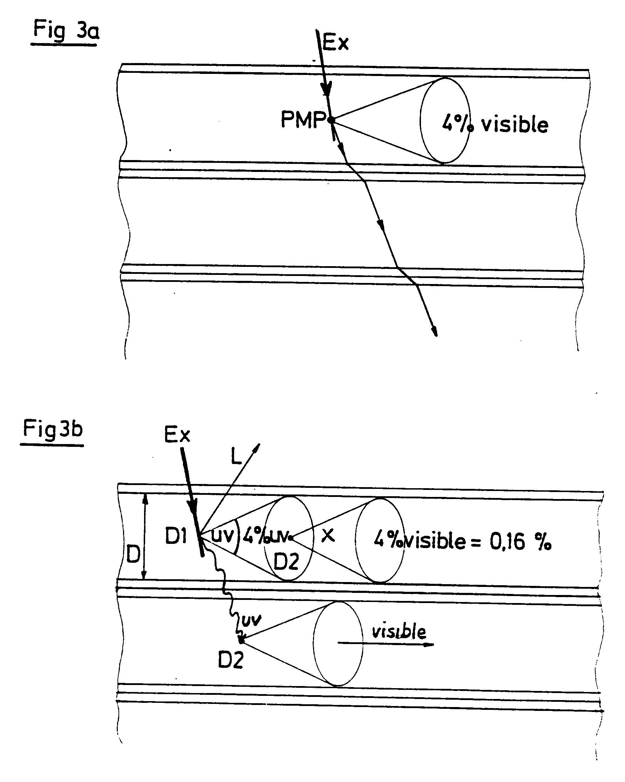

La figure 3a schématise à échelle dilatée un faisceau de fibres conformes à l'invention. Le dopant émet la lumière de façon isotrope et les conditions de réflexion totale à l'interface coeur/gaine entraînent que 4 % environ de la lumière est guidée dans chaque sens de la fibre le long de sa direction longitudinale. Ce pourcentage est compatible avec la sensibilité des photodétecteurs habituellement placés en bout de fibre. Ceci est vrai quelle que soit la taille de la fibre.

Il est à souligner que, dans le processus d'échange d'énergie mis en jeu dans la fibre de l'invention, il n'apparaît jamais de lumière ultraviolette. La lumière non guidée qui est émise par le dopant PMP sous l'effet du rayonnement excitateur Ex, se caractérise par une longueur d'onde visible qui traverse les fibres voisines sans être réabsorbées par les molécules de dopage de ces fibres (en raison de l'unicité du dopant et du non-recouvrement de ses pics P₁ et P₂). Ainsi, il n'y a pas de scintillation parasite d'une fibre non directement atteinte par le rayonnement d'excitation que l'on veut localiser.

A titre comparatif, la figure 3b concerne un faisceau de fibres classiques à deux dopants en série ; cette figure illustre dans les mêmes conditions de diamètre de fibre que, dans ce cas, seulement 4 % x 4 % = 0,16 % de la lumière est guidée dans chaque sens lorsque le libre parcours L des photons intermédiaires est grand par rapport au diamètre de la fibre. Dans la plane de concentration autorisée par les dopants de décalage D₂ usuels (5.10⁻⁴ mole/l), ce libre parcours est de l'ordre de 400 à 500 µm ; ceci est un des facteurs de limitation qui fait obstacle à ce que le diamètre des fibres soit réduit au-dessous de cette valeur dans la technique connue.

De plus, les photons intermédiaires non guidés qui sont émis par le dopant de capture D₁ le sont sur une longueur d'onde de l'ordre de 350 nm (pic P₄) ; ils se propagent vers les fibres voisines où ils sont réabsorbés par le dopant de décalage (pic P₅) et réémis sous forme de lumière visible parasite dans une fibre non excitée. Il est donc nécessaire de prévoir autour de chacune de ces fibres connues une gaine supplémentaire, opaque à ces photons intermédiaires.

## Revendications

1. Procédé de fabrication de fibres optiques scintillantes du type consistant à utiliser un monomère possédant des cycles aromatiques, dit monomère de coeur, en particulier vinyltoluène ou styrène, à dissoudre dans ledit monomère des molécules de dopage présentant un décalage de Stokes, à chauffer le mélange en vue de l'amener à polymériser pour conduire à un polymère dit de coeur et à effectuer une opération de dépôt en surface d'un matériau de gainage d'indice de réfraction inférieur à celui du polymère de coeur et une opération d'étirage dudit polymère en vue de réaliser la fibre optique, ledit procédé étant caractérisé en ce que, d'une part, l'on dissout dans le monomère de coeur des molécules de dopage de 1-phényl-3-mésityl-2-pyrazoline (PMP) présentant un décalage de Stokes caractéristique d'une absorption de la lumière ultraviolette avec un pic à 295 nm (mesuré en solution dans du cyclohexane) et d'une réémission dans le visible avec un pic à 410 nm (mesuré en solution dans du cyclohexane), ladite dissolution étant effectuée pour obtenir un mélange de concentration comprise entre 0,005 et 0,2 mole de PMP par litre de monomère, d'autre part, l'on réalise la polymérisation dudit mélange, notamment en ajoutant un agent de transfert de chaîne, de façon à limiter la masse moléculaire du polymère de coeur obtenu à des valeurs comprises entre 80 000 et 600 000.

2. Procédé de fabrication selon la revendication 1, caractérisé en ce que l'on dissout le PMP dans le monomère de coeur en vue d'obtenir un mélange de concentration comprise entre 0,01 et 0,05 mole de PMP par litre de monomère.

3. Procédé de fabrication selon l'une des revendications 1 ou 2, caractérisé en ce que l'on chauffe le mélange en deux étapes, d'abord jusqu'à un premier palier situé entre 90° C et 110° C pendant une durée adaptée pour atteindre un taux de polymérisation au moins égal à 80 %, puis jusqu'à un second palier situé entre 130° C et 150° C jusqu'à obtenir un taux de polymérisation supérieur à 99,5 %.

4. Procédé de fabrication selon l'une des revendications 1, 2 ou 3, caractérisé en ce :
- le mélange est amené à polymériser dans une ampoule cylindrique en vue d'obtenir un barreau après polymérisation,
- ledit barreau est refroidi à une vitesse de refroidissement inférieure à 0,15° C/minute jusqu'à la température ambiante,
- l'opération d'étirage est effectuée après avoir réchauffé le barreau jusqu'à ramollissement,

5. Procédé de fabrication selon la revendication 4, caractérisé en ce que le refroidissement est réalisé en plusieurs étapes ayant des vitesses de refroidissement décroissantes au fur et à mesure que l'on approche la température de transition vitreuse du polymère de coeur, la vitesse de refroidissement pour franchir cette température étant inférieure à 0,05° C/minute.

6. Procédé de fabrication selon l'une des revendications 4 ou 5, dans lequel l'on utilise un matériau de gainage constitué par un monomère acrylique fluoré, dit monomère de gaine, l'on dépose ce monomère de gaine en surface du barreau de polymère de coeur, l'on amène ledit monomère de gaine à polymériser autour dudit barreau et l'on réchauffe et l'on étire l'ensemble.

7. Procédé de fabrication selon l'une des revendications 1 à 6, dans lequel l'on ajoute au monomère de coeur ou au mélange un produit antioxydant adapté pour limiter les phénomènes d'oxydation du polymère de coeur et du PMP.

8. Procédé de fabrication selon l'une des revendications 1 et 7, dans lequel l'on utilise un agent de transfert de chaîne du groupe suivant : glycoldimercapto acétate, ou n butyl mercaptan, ou lauryl mercaptan, en concentration comprise entre 0,01 et 0,05 mole/litre.

9. Procédé de fabrication selon l'une des revendications 1 à 8, dans lequel l'on opère une dessication préalable du monomère de coeur ou du mélange, en vue de réduire le taux d'humidité à une valeur inférieure à 10 ppm.

10. Procédé de fabrication selon l'une des revendications 1 à 9, caractérisé en ce que l'on opère un dégazage du mélange avant polymérisation par des cycles successifs de congélation / vide primaire / décongélation.

11. Fibre optique scintillante, comprenant un coeur en polymère à cycles aromatiques contenant des molécules de dopage à décalage de Stokes, et une gaine périphérique d'indice de réfraction inférieur à celui du coeur, caractérisée'en ce que :
- le polymère de coeur possède une masse moléculaire comprise entre 80 000 et 600 000,
- les molécules de dopage sont constituées par du 1-phényl-3-mésityl-2-pyrazoline (PMP) de façon que la fibre soit apte à transformer directement une énergie d'excitation d'un rayonnement α, β ou γ en lumière visible, et à transmettre et guider cette dernière.

12. Fibre optique scintillante selon la revendication 11 dont le coeur contient un produit antioxydant.

## Patentansprüche

1. Verfahren zur Herstellung von szintillierenden optischen Fasern der Art, die in der Verwendung eines Monomers mit aromatischen Ringen, des sogenannten Kernmonomers, insbesondere Vinyltoluol oder Styrol, besteht, im Auflösen in dem besagten Monomer von Dotiermolekülen mit Stokes'scher Verschiebung, im Erhitzen des Gemisches zwecks dessen Polymerisation, um einen sogenannten Kernpolymer zu erzielen, und im Ausführen einer Operation der Oberflächenabsetzung eines Hüllmaterials, dessen Brechungszahl niedriger ist als die des Kernpolymers, sowie einer Operation des Ziehens des besagten Polymers zwecks Herstellung der optischen Faser, wobei das besagte Verfahren dadurch gekennzeichnet ist, daß man in dem Kernmonomer einerseits Dotiermoleküle von 1-Phenyl-3-mesityl-2-pyrazolin (PMP) mit einer Stokes'schen Verschiebung auflöst, die für Absorption bei ultraviolettem Licht bei einem Spitzenwert von 295 nm (gemessen in Lösung in Cyclohexan) und Rückstrahlung im sichtbaren Bereich bei einem Spitzenwert von 410 nm (gemessen in Lösung in Cyclohexan) kennzeichnend ist, wobei die besagte Auflösung bewirkt wird, um ein Gemisch mit einer Konzentration , zwischen 0,005 und 0,2 Mol PMP je Liter Monomer zu erzielen, und andererseits dadurch, daß man die Polymerisation des besagten Gemisches bewirkt, insbesondere durch Zusatz eines Kettenübertragers, um das Molekulargewicht des erzielten Kernpolymers auf Werte zwischen 80.000 und 600.000 zu begrenzen.

2. Herstellungsverfahren nach Anspruch 1, dadurch gekennzeichnet, daß man das PMP in dem Kernmonomer auflöst, um ein Gemisch mit einer Konzentration zwischen 0,01 und 0,05 Mol PMP je Liter Monomer zu erzielen.

3. Herstellungsverfahren nach einem der Ansprüche 1 oder 2, dadurch gekennzeichnet, daß man das Gemisch in zwei Stufen erhitzt, in erster Linie während einer Zeitspanne, die so beschaffen ist, daß man eine Polymerisationsrate von mindestens 80% erzielt, bis zu einem ersten Niveau zwischen 90°C und 110°C und dann bis zu einem zweiten Niveau zwischen 130°C und 150°C, bis man eine Polymerisationsrate von mehr als 99,5% erzielt.

4. Herstellungsverfahren nach einem der Ansprüche 1, 2 oder 3, dadurch gekennzeichnet,
- daß das Gemisch in einer zylindrischen Ampulle zum Polymerisieren veranlaßt wird, um nach Polymerisation einen Stab zu erzielen,
- daß der besagte Stab mit einer Kühlgeschwindigkeit von weniger als 0,15°C/Minute bis auf die Umgebungstemperatur gekühlt wird,
- daß die Ziehoperation nach Erhitzen des Stabes bis zur Erweichung durchgeführt wird.

5. Herstellungsverfahren nach Anspruch 4, dadurch gekennzeichnet, daß die Kühlung in mehreren Stufen durchgeführt wird, und zwar bei Kühlraten, die um so geringer sind, je näher man der Glasübergangstemperatur des Kernpolymers kommt, wobei die Kühlrate, bei der diese Temperatur überschritten wird, geringer ist als 0,05°C/Minute.

6. Herstellungsverfahren nach einem der Ansprüche 4 oder 5, bei dem von einem aus einem fluorierten Acrylmonomer bestehenden Hüllmaterial, dem sogenannten Hüllmonomer, Gebrauch gemacht wird, der Hüllmonomer an der Oberfläche des Kernpolymerstabs abgesetzt wird, der sogenannten Hüllmonomer zum Polymerisieren rings um den besagten Stab veranlaßt wird und die gesamte Einheit erhitzt und gezogen wird.

7. Herstellungsverfahren nach einem der Ansprüche 1 bis 6, bei dem man dem Kernmonomer oder dem Gemisch ein Antioxidationsprodukt zusetzt, das so beschaffen ist, daß es die Oxidationserscheinungen des Kernpolymers und des PMP begrenzt.

8. Herstellungsverfahren nach einem der Ansprüche 1 und 7, bei dem man von einem Kettenübertrager der folgenden Gruppe Gebrauch macht: Glykoldimercaptoacetat oder n-Butyl-mercaptan oder Lauryl-mercaptan, und zwar in einer Konzentration zwischen 0,01 und 0,05 Mol/Liter.

9. Herstellungsverfahren nach einem der Ansprüche 1 bis 8, bei dem man Vortrocknung des Kernmonomers oder des Gemisches bewirkt, um die Feuchtigkeit auf einen Wert von weniger als 10 ppm zu verringern.

10. Herstellungsverfahren nach einem der Ansprüche 1 bis 9, dadurch gekennzeichnet, daß man vor dem Polymerisieren Entgasung des Gemisches durch aufeinanderfolgende Zyklen von Gefrieren / Ausübung eines Primärvakuums / Auftauen bewirkt.

11. Szintillierende optische Faser, die einen Polymerkern aus Dotiermoleküle mit Stokes'scher Verschiebung enthaltenden aromatischen Ringen sowie eine Umfangshülle, deren Brechungszahl niedriger ist als die des Kernes umfaßt, dadurch gekennzeichnet,
- daß der Kernpolymer ein Molekulargewicht zwischen 80.000 und 600.000 aufweist,
- daß die Dotiermoleküle aus 1-Phenyl-3-mesityl-2-pyrazilin (PMP) bestehen, so daß die Faser in der Lage ist, Anregungsenergie einer α-, β- oder γ-Strahlung unmittelbar in sichtbares Licht umzuformen und letzteres zu übertragen und zu leiten.

12. Szintillierende optische Faser nach Anspruch 11, deren Kern ein Antioxidationsprodukt enthält.

## Claims

1. Process for producing scintillating optical fibres of the type consisting in the use of a monomer having aromatic rings, the so-called core monomer, in particular vinyl toluene or styrene, dissolution in said monomer of doping molecules exhibiting a Stokes shift, heating the mixture with a view to causing its polymerisation so as to produce a polymer referred to as the core polymer and carrying out an operation of depositing on its surface a casing material with a refraction index lower than that of the core polymer, as well as an operation of drawing said polymer with a view to producing the optical fibre, said process being characterised in that, on the one hand, doping molecules of 1-phenyl-3- mesityl-2-pyrazoline (PMP) exhibiting a Stokes shift characteristic of ultraviolet light absorption with a peak at 295 nm (measured in solution in cyclohexane) and of re-emission in the visible range with a peak at 410 nm (measured in solution in cyclohexane), are dissolved in the core monomer, dissolution being carried out so as to obtain a mixture with a concentration between 0.005 and 0.2 mol PMP per litre of monomer, and in that, on the other hand, polymerisation of said mixture is brought about, in particular by adding a chain-transfer agent so as to limit the molecular weight of the core polymer obtained to values between 80,000 and 600,000.

2. Production process according to Claim 1, characterised in that the PMP is dissolved in the core monomer with a view to obtaining a mixture with a concentration between 0.01 and 0.05 mol PMP per litre of monomer.

3. Production process according to one of Claims 1 or 2, characterised in that the mixture is heated in two stages, initially to a first level between 90°C and 110°C during a time suitable to achieve a rate of polymerisation at least equal to 80%, and then to a second level between 130°C and 150°C until a rate of polymerisation above 99.5% is achieved.

4. Production process according to one of Claims 1, 2 or 3, characterised in that:
- the mixture is caused to polymerise in a cylindrical ampoule with a view to obtaining a bar after polymerisation,
- said bar is cooled to the ambient temperature at a cooling rate lower than 0.15°C/minute,
- the drawing operation is carried out after reheating the bar until it has softened.

5. Production process according to Claim 4, characterised in that cooling is effected in several stages at cooling rates which decrease as the second order transition temperature of the core polymer is approached, the cooling rate to exceed that temperature being lower than 0.05°C/minute.

6. Production process according to one of Claims 4 or 5, in which use is made of a casing material consisting of a fluorinated acrylic monomer, the so-called casing monomer, said casing monomer is deposited on the surface of the core polymer bar, said casing monomer is caused to polymerise about said bar and the assembly is heated and drawn.

7. Production process according to one of Claims 1 to 6, in which an antioxidant product suitable for limiting the phenomena of oxidation of the core polymer and the PMP is added to the core monomer or to the mixture.

8. Production process according to one of Claims 1 and 7, in which use is made of a chain-transfer agent pertaining to the following group: glycoldimercaptoacetate or n-butyl-mercaptan or lauryl-mercaptan, in a concentration between 0.01 and 0.05 mol/litre.

9. Production process according to one of Claims 1 to 8, in which the core monomer or the mixture is subjected to preliminary drying with a view to reducing the humidity to a value lower than 10 ppm.

10. Production process according to one of Claims 1 to 9, characterised in that the mixture is subjected to degassing prior to polymerisation by applying successive cycles of freezing / primary vacuum / thawing.

11. Scintillating optical fibre, comprising a core of polymer with aromatic rings containing doping molecules exhibiting a Stokes shift, as well as a peripheral casing, the refraction index of which is lower than that of the core, characterised in that:
- the core polymer has a molecular weight comprised between 80,000 and 600,000;
- the doping molecules consist of 1-phenyl-3-mesityl-2-pyrazoline (PMP) as a result of which the fibre is capable of directly transforming excitation energy of α, β or γ radiation into visible light and of transmitting and guiding the latter.

12. Scintillating optical fibre according to Claim 11, the core of which contains an antioxidant product.
